# EUROPÄISCHE PATENTSCHRIFT

(11) **EP 2 271 527 B1**
(45) Veröffentlichungstag und Bekanntmachung des Hinweises auf die Patenterteilung: **12.02.2014**
(21) Anmeldenummer: 10703856.4
(22) Anmeldetag: 10.02.2010
(51) Int. Cl.: B60S 9/08

(54) **HÖHENVERSTELLBARE STÜTZE FÜR SATTELAUFLIEGER ODER DERGLEICHEN**
HEIGHT ADJUSTABLE SUPPORT FOR SEMITRAILER OR THE LIKE
APPUI RÉGLABLE EN HAUTEUR POUR UNE SEMI-REMORQUE OU SIMILAIRE

(30) Priorität: 16.03.2009 DE 202009003719 U; 13.05.2009 DE 202009006892 U; 22.07.2009 DE 202009009952 U
(43) Veröffentlichungstag der Anmeldung: 12.01.2011
(73) Patentinhaber: SAF-HOLLAND GmbH, 63856 Bessenbach (DE)
(72) Erfinder: RIEDL, Reinhold, 63897 Miltenberg (DE)
(74) Vertreter: Müller Schupfner & Partner
(86) Internationale Anmeldenummer: PCT/EP2010/051654
(87) Internationale Veröffentlichungsnummer: WO 2010/105880

(56) Entgegenhaltungen:
- DE-A1- 19 836 635
- DE-U1- 20 305 175

## Beschreibung

Die Erfindung bezieht sich auf eine höhenverstellbare Stütze für Sattelauflieger oder dergleichen gemäß dem Oberbegriff des Anspruchs 1. Derartige Stützen sind paarweise vorn an Sattelaufliegern angebracht und können im Schnellgang in Abstütz- oder Transportstellung gebracht und im Lastgang zum Anheben des vorderen Sattelaufliegerbereichs genutzt werden, wenn das beim Aufsatteln erforderlich ist.

Beispielhafte Stützen sind aus der EP 0 972 689 B1 und der DE 88 13 558 U1 bekannt. Bei diesen befindet sich jeweils auf der Abtriebswelle ein durchmessergroßes Stirnzahnrad für den Lastgang, das vom Gehäuse eines Getriebes abgedeckt wird, welches außen am Schaftrohr sitzt. Dadurch ergibt sich, dass ab der Mitte der Abtriebswelle bis zur Oberkante des Getriebegehäuses ein großer Abstand besteht, der die Bauhöhe dieser Stützen ungünstigerweise vergrößert. Ein weiterer Stand der Technik wird in der DE 198 36 635 C5 offenbart. Bei dieser sogenannten Vorrichtung zum Abstützen eines Aufliegers eines Sattelschleppers sitzt auf der Abtriebswelle bzw. Getriebeausgangswelle ein durchmessergroßes Lastgangzahnrad, das in einer vertikal innerhalb der äußeren Hülse verlaufenden Ebene angeordnet ist und von einer Haube abgedeckt wird. Auch bei dieser Vorrichtung ist das Maß von der Abtriebswellenmitte bis zu ihrem oberen Ende unvorteilhafter Weise groß. Die aufgezeigten Nachteile sind repräsentativ für die auf dem Markt befindlichen Stützen für Sattelauflieger, indem sie die Gesamtbauhöhe nach oben vergrößern und unter schlechter Nutzung des zur Verfügung stehenden Bauraums wenig Design-Flexibilität beim Anbauen an den Sattelauflieger bieten. Das ist besonders eklatant bei Großraumsattelaufliegern, deren Rahmen notwendiger Weise extrem tiefliegend sind. Hierbei können nämlich nur Stützen mit geringer Gesamtbauhöhe zum Einsatz kommen. Wenn jedoch oberhalb der Abtriebswelle bereits ein hubmäßig ungenutzter Bauhöhenanteil besteht, kann eine niedrige Gesamtbauhöhe nur durch eine Hubverringerung des aus- und einfahrbaren Stützenteils erreicht werden. Das bedeutet, dass die Bodenfreiheit für den Fahrbetrieb nicht optimal sein kann oder gänzlich unzulässig wird und dadurch die Verwendung der Stütze unmöglich macht.

Die DE 203 05 175 U1 betrifft eine höhenverstellbare Stütze für Sattelaufleger mit einem ortsfest angebrachten Stützenaußenrohrkörper und einem darin längs verschiebbar angeordneten Stützeninnenrohr mit einer in der Stütze gelagerten über ein Zahnradschaltgetriebe und eine Kegelradstufe antreibbaren Spindeltrieb, wobei die Getriebeeingangswelle und die Getriebeausgangswelle in derselben Achse liegen.

Es ist Aufgabe der Erfindung, eine höhenverstellbare Stütze für Sattelauflieger oder dergleichen vorzusehen, bei der der Bauhöhenanteil, definiert als Maß ab der Mitte der Abtriebswelle bis zu ihrem oberen Ende, vorteilhaft und deutlich kleiner ist als bei den herkömmlichen Stützen und welche eine kompakte Ausgestaltung aufweist sowie kostengünstig herzustellen ist.

Diese Aufgabe wird durch eine höhenverstellbare Stütze für Sattelauflieger oder dergleichen gemäß Anspruch 1 gelöst. Bevorzugte Ausführungsformen ergeben sich aus den abhängigen Ansprüchen.

Erfindungsgemäß ist eine höhenverstellbare Stütze für Sattelauflieger oder dergleichen vorgesehen, umfassend ein an einem Chassis des Sattelaufliegers befestigbares bzw. ortsfest angebrachtes Stützenaußenrohr, ein im Stützenaußenrohr angeordnetes verschiebbares Stützeninnenrohr, an dessen unteren Endbereich ein Fuß befestigt ist und das mit einer Mutter verbunden ist, die sich auf einer Spindel befindet, welche über ein Getriebe antreibbar ist, wobei das Getriebe mindestens eine Kegelradstufe und einen vorgelagerten umschaltbaren Getriebebereich mit stirnverzahnten Zahnrädern für einen Schneligangbetrieb und einen Lastgangbetrieb aufweist, wobei die mindestens vorhandenen Zahnräder und Ritzel, nämlich ein Schnellgangzahnrad mit einem Schnellgangritzel, ein Lastgangritzel mit einem Lastgang-Zwischenzahnrad sowie ein Lastgang-Zwischenritzel mit einem Lastgangzahnrad des vorgelagerten Getriebebereichs, paarweise in mindestens drei verschiedenen vertikalen Ebenen verteilt innerhalb und/oder vor dem Stützenaußenrohr angeordnet sind. Zweckmäßigerweise sind die mindestens vorhandenen Zahnräder und Ritzel paarweise in mindestens drei verschiedenen vertikalen Ebenen verteilt im vorderen Bereich der Stütze innerhalb und/oder vor dem Stützenaußenrohr angeordnet. Bei der erfindungsgemäßen Stütze ist für eine vorteilhaft kompakte Bauweise auf der Abtriebswelle des Getriebes kein durchmessergroßes Zahnrad erforderlich, welches deren hubmäßg ungenutzte Bauhöhe vergrößert. Dadurch wird vorteilhafterweise ermöglicht, die Stütze in Bezug auf die Abtriebswellen höher an den Sattelauflieger montieren zu können, wodurch die geforderte Bodenfreiheit erzielt wird. Dazu wird vorgeschlagen den Bereich des Getriebes mit den stirnverzahnten Zahnrädern so zu gestalten, dass die mindestens vorhandenen Zahnräder und Ritzel paarweise in mehreren vertikalen Ebenen verteilt im vorderen Bereich der Stütze innerhalb des Stützenaußenrohres und vor dem Stützenaußenrohr, oder innerhalb des Ausgangsquerschnitts bzw. regulären Querschnitts des Stützenaußenrohres und in einem örtlichen Ausprägungsbereich der Vorderwand des Stützenaußenrohres angeordnet sind. Es können somit die mindestens vorhandenen Zahnräder und Ritzel paarweise in mindestens drei verschiedenen vertikalen Ebenen verteilt innerhalb des Ausgangsquerschnitts des Stützenaußenrohres und vor dem Stützenaußenrohr oder in einem Ausprägungsbereich der Vorderwand des Stützenaußenrohres angeordnet sein.

Vorteilhafterweise ist wenigstens der Lastgangbereich mit den stirnverzahnten Zahnrädern zweistufig. Wenn zumindest der Lastgangbereich zweistufig gestaltet wird, kann das Lastgangzahnrad, welches auf der Abtriebsweile bei dem dort ebenfalls erforderlicher Weise angebrachten Kegelritzel sitzt, vorzugsweise durchmessermäßig so klein dimensioniert werden, dass es nicht oder nur in geringem Maße das Kegelritzel überragt. Damit werden die geschilderten Nachteile herkömmlicher Stützen vermieden.

Zweckmäßigerweise ist das Schnellgangzahnrad drehbar auf dem Ritzel-Kupplungsteil gelagert ist und in permanentem Eingriff mit dem Schnellgangritzel.

Vorzugsweise befinden sich das Schnellgangzahnrad mit dem Schnellgangritzel und das Lastgang-Zwischenritzel mit dem Lastgangzahnrad in jeweils einer vertikalen Ebene innerhalb des regulären Querschnittes des Stützenaußenrohres und die Verzahnung des Lastgangritzels mit dem Lastgang-Zwischenzahnrad ist in einer vertikalen Ebene vor dem Stützenaußenrohr angeordnet.

Bevorzugterweise befinden sich das Schnellgangzahnrad mit dem Schnellgangritzel und das Lastgang- Zwischenritzel mit dem Lastgangzahnrad in jeweils einer vertikalen Ebene innerhalb des regulären Querschnittes des Stützenaußenrohres und die Verzahnung des Lastgangritzels mit dem Lastgang-Zwischenzahnrad sind in einer vertikalen Ebene innerhalb eines zweckmäßigerweise örtlichen Ausprägungsbereiches der Vorderwand des Stützenaußenrohres angeordnet.

Vorzugsweise sollte das Schnellgangzahnrad mit dem Schnellgangritzel und ein Lastgang-Zwischenritzel mit dem Lastgangzahnrad jeweils in einer vertikalen Ebene innerhalb des Ausgangsquerschnitts bzw. regulären Querschnittes des Stützenaußenrohres angeordnet sein und das Lastgangritzel mit einem Lastgang-Zwischenzahnrad in einer vertikalen Ebene vor dem Stützenaußenrohr bzw. in dessen Ausprägungsbereich platziert werden.

Vorteilhafterweise ist im Stützenaußenrohr mindestens ein Lagerteil für den Lastgang-Zwischenzahnradsatz und/oder eine Abtriebswelle befestigt.

Zweckmäßigerweise ist eine Lagerhülse zur Lagerung eines Triebstücks vorgesehen, die nicht lösbar und/oder hermetisch dicht an der Außenseite des Ausprägungsbereichs des Stützenaußenrohres befestigt ist. An der Außenseite des Ausprägungsbereichs des Stützenaußenrohres kann somit eine Lagerhülse nicht lösbar befestigt sein, wodurch vorteilhafterweise das Getriebe in einer geschlossenen Ausgestaltung möglich ist.

Vorzugsweise sind das Lastgang-Zwischenzahnrad und das Lastgang-Zwischenritzel als einstückiger Lastgang-Zwischenzahnradsatz ausgebildet. Im Lasttriebbereich des Getriebes kann somit vorzugsweise ein einstückiger bzw. einteiliger bzw. integraler Zwischenzahnradsatz vorgesehen werden. Zweckmäßigerweise sind das Lastgang-Zwischenzahnrad und das Lastgang-Zwischenritzel auf einem Lastgang-Zwischenzahnradsatz vereint.

Vorteilhafterweise weist der Lastgang-Zwischenzahnradsatz zwischen dem Lastgang-Zwischenritzel und dem Lastgang-Zwischenzahnrad einen Lagerbereich auf.

Zweckmäßigerweise ist der Lastgang-Zwischenzahnradsatz im Bereich der vorderen Wandung des Stützenaußenrohres und in einem Deckel-Lagerteil gelagert.

Der Zwischenzahnradersatz ist vorteilhaft entweder im vorderen Wandbereich des Stützenaußenrohres und an einem am Stützenaußenrohr angebrachten Deckel-Lagerteil oder in einem im Stützenaußenrohr befestigten Lagerteil und im Ausprägungsbereich der Wand des Stützenaußenrohres gelagert.

Bevorzugterweise weist der Lastgang-Zwischenzahnradsatz einen Innenlagerbereich auf.

Vorteilhafterweise ist der Lastgang-Zwischenzahnradsatz auf einer Seite auf einem Königszapfen gelagert, der an einem Deckel-Lagerteil oder im vorderen Wandbereich des Stützenaußenrohres angebracht ist. Zur kompakten Ausgestaltung wird beigetragen, wenn der Zwischenzahnradsatz auf der Stützenvorderseite mittels eines Königszapfens gelagert wird.

In einer bevorzugten Ausführungsform sind das Lastgangzahnrad, das Schnellgangritzel und das Kegelritzel ein Teil.

Zweckmäßigerweise überragt der Kopfkreisdurchmesser des Lastgangzahnrads den größten Durchmesser des Kegelritzels nicht oder nicht wesentlich.

Weitere Vorteile und Merkmale der Erfindung ergeben sich aus der nachfolgenden Beschreibung von bevorzugten Ausführungsformen mit Bezug auf die Figuren, wobei einzelne Merkmale von verschiedenen Ausführungsformen zu neuen Ausführungsformen kombiniert werden können. Es zeigen:
- Fig. 1: eine Vorderansicht einer bevorzugten Ausführungsform der erfindungsgemäßen Stütze.
- Fig. 2: eine Seitenansicht der in Fig.1 gezeigten Stütze.
- Fig. 3: einen Längsschnitt einer bevorzugten Ausführungsform der erfindungsgemäßen Stütze entlang der in Fig.1 gezeigten Linie A-A.
- Fig. 4: einen Längsschnitt einer weiteren bevorzugten Ausführungsform der erfindungsgemäßen Stütze entlang der in Fig.1 gezeigten Linie A-A.

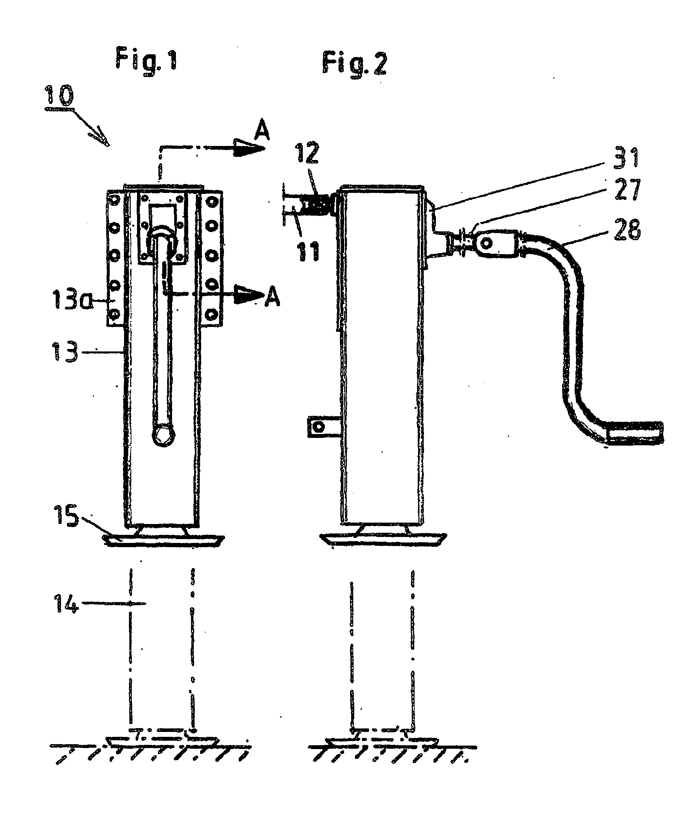

Die in Fig. 1 bis 4 gezeigte Stütze 10 wird paarweise an einem Sattelauflieger eingesetzt, wobei jedes Paar mittels einer Verbindungswelle 11 zwischen den Abtriebswellen 12 antriebsmäßig miteinander verbunden ist. In Transportstellung sind die Stützen eingefahren, d.h. in verkürztem Zustand. Vor dem Abkoppeln des Sattelaufliegers vom Sattelschlepper, werden die Stützen 10 ausgefahren.

Die Stütze 10 weist ein Stützenaußenrohr 13 und ein darin längsverschiebbar angeordnetes Stützeninnenrohr 14 auf. Das Stützenaußenrohr 13 und das Stützeninnenrohr 14 besitzen vorzugsweise quadratische Querschnitte. Die Stütze 10 wird über eine am Stützenaußenrohr 13 befindliche Anschraubplatte 13a am Chassis des Sattelaufliegers befestigt. Am unteren Ende des Stützeninnenrohres 14 befindet sich ein Fuß 15 zum Aufsetzen auf den Boden.

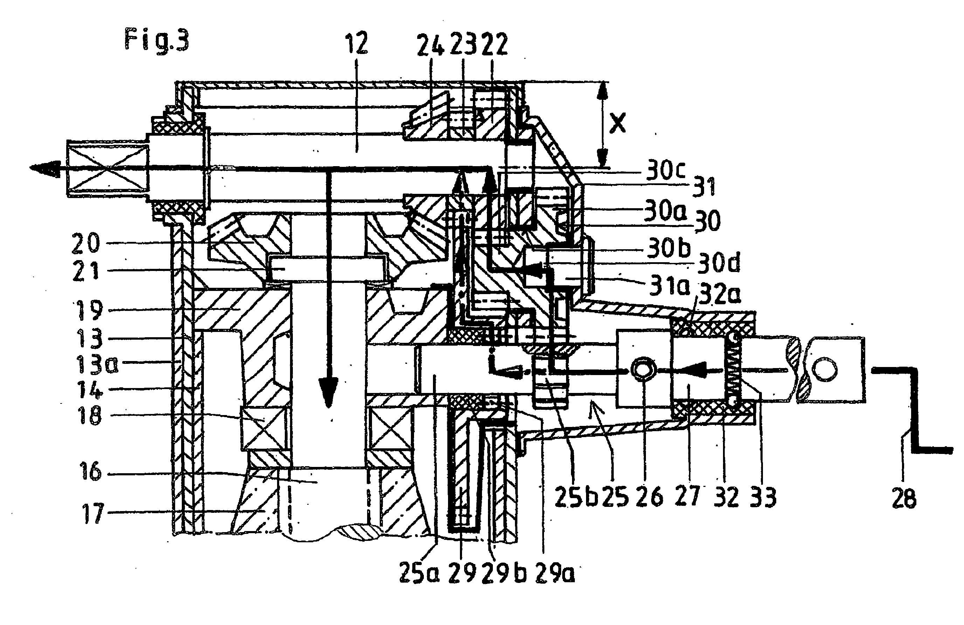

Wie in **Fig. 3** dargestellt, weist die Stütze 10 eine Spindel 16 mit einer Mutter 17 auf. Die Mutter 17 ist mit dem Stützeninnenrohr 14 verbunden (nicht dargestellt). Auf einer Scheibe auf der Schulter der Spindel 16 sitzt ein Axiallager 18, das sich an einem im bzw. am Stützenaußenrohr 13 befestigten Lagerungenteil 19 abstützt. Oberhalb des Lagerungenteils 19 befindet sich ein Tellerrad 20, das mittels eines Stifts 21, der die Spindel 16 trägt, drehfest mit der Spindel 16 verbunden ist. Über dem Tellerrad 20 ist die Abtriebswelle 12 im Stützenaußenrohr 13 gelagert.

Auf dem vorderen Bereich der Abtriebswelle 12 sitzen jeweils drehfest angebracht ein Lastgangzahnrad 22, ein Schnellgangritzel 23 und ein Kegelritzel 24. Der Kopfkreisdurchmesser des Lastgangzahnrades 22 ist konzeptionell klein dimensioniert, so dass von der Mitte bzw. Rotationsachse der Abtriebswelle 12 bis zum oberen Ende der Stütze 10 lediglich ein geringer Bauhöhenanteil mit dem Maß X vorhanden ist.

Im Lagerungenteil 19 ist die Spindel 16 vertikal und in horizontaler Anordnung darin ein axial verschiebbares Ritzel-Kupplungsteil 25 gelagert. Das Ritzel-Kupplungsteil 25 weist einen Lagerzapfen 25a sowie eine Verzahnung als Lastgangritzel 25b auf und ist über eine Schäftung mittels eines Spannstifts 26 mit einem Triebstück 27 verbunden. Am äußeren Ende des Triebstücks 27 ist eine abschwenkbare Handkurbel 28 befestigt. Der Lagerzapfen 25a dient neben der Lagerung des Ritzel-Kupplungsteils 25 mit seinem Mittelbereich auch der Lagerung eines Schnellgangzahnrades 29, das dem auf der Abtriebswelle 12 sitzenden Schnellgangritzel 23 zugeordnet ist. Im Schnellgangzahnrad 29 befindet sich eine Kuppelverzahnung 29a und eine Lagerbuchse 29b.

Zwischen dem Ritzel-Kupplungsteil 25 und der Abtriebswelle 12 ist in paralleler Achsenanordnung ein Lastgang-Zwischenzahnradsatz 30 angeordnet. Der Lastgang-Zwischenzahnradsatz 30 besteht aus einem Lastgang-Zwischenzahnrad 30a, mit dem die Verzahnung des Lastgangritzels 25b zusammenwirken kann, einem Lagerbereich 30b sowie einem Lastgang-Zwischenritzel 30c, das in das Lastgangzahnrad 22 eingreift. Außerdem weist der Lastgang-Zwischenzahnradsatz 30 stirnseitig einen Innenlagerbereich 30d auf. Die Lagerung des Lastgang-Zwischenzahnradsatzes 30 erfolgt mittig mit seinem Lagerbereich 30b in der partiell verstärkten vorderen Wandung des Stützenaußenrohres 13 und endseitig mit seinem Innenlagerbereich 30d auf einem an einem Deckel-Lagerteil 31 befindlichen Königszapfen 31 a. Das Deckel-Lagerteil 31 weist einen mit einer Bundbuchse 32 ausgestatteten Lagerbereich für das Triebstück 27 und einen Abdeckbereich auf, mit dem es an das Stützenaußenrohr 13 angeflanscht ist. In der Bundbuchse 32 befinden sich zwei Radialnuten 32a in die wechselweise eine in das Triebstück 27 eingebaute Kugelarretierung 33 einrasten kann.

Die Getriebefunktionen der Stütze 10 sind wie folgt:

Für den Lastgangbetrieb ist die Verzahnung des Lastgangritzels 25b in Eingriff bzw. in Eingriffstellung mit dem Lastgang-Zwischenzahnrad 30a, wobei die Kugelarretierung 30 im Triebstück 27 für eine axiale Fixierung des Ritzel-Kupplungsteiles 25 in die vordere Radialnut 32a eingerastet ist. Wie in Fig. 3 mit Pfeillinien dargestellt, erfolgt beim Drehen der Handkurbel 28 der Kraftfluß vom Triebstück 27 zunächst in das Ritzel-Kupplungsteil 25 und von dort über die Verzahnung des Lastgangritzels 25b weiter auf das Lastgang-Zwischenzahnrad 30a des Lastgang Zwischenzahnradsatzes 30. Das Lastgang-Zwischenritzel 30c überträgt die Kraft auf das Lastgangzahnrad 22 und somit in die Abtriebswelle 12. Der Kraftfluß verzweigt sich dann in einen Teil, der über das Kegelritzel 24 und das Tellerrad 20 in die Spindel 16 eingeleitet wird, um die Mutter 17 mit dem daran befestigten Stützeninnenrohr 14 zu bewegen, und einen Teil, der am Zapfen der Abtriebswelle 12 zur Weiterleitung über die Verbindungswelle 11 zum Antreiben der Nachbarstütze zur Verfügung steht.

Im Schnellgangbetrieb ist das Ritzel-Kupplungsteil 25 in Richtung zur Mitte der Stütze 10 verschoben (nicht dargestellt), so dass die Verzahnung des Lastgangritzels 25b mit seinem vorderen Bereich in die volle Tiefe der Kuppelverzahnung 29a des Schnellgangzahnrades 29 eintaucht, wodurch eine formschlüssige Koppelung des Ritzel-Kupplungsteiles 25 mit dem Schnellgangzahnrad 29 besteht. Die Kugelarretierung 30 ist dabei in die hintere Radialnut 32a eingerastet. Der Kraftfluß erfolgt wie in **Fig. 3** mit strichpunktierten Pfeillinien gezeigt.

Zwischen der Schaltstellung des Ritzel-Kupplungsteils 25 für den Lastgang und der für den Schnellgang ist eine Freischaltung möglich, in der die Verzahnung des Lastgangritzels 25b außer Eingriff ist. Während des Umschaltens kann, sofern erforderlich, über diese Freischaltung durch eine kleine Leerlaufbewegung das Ritzel-Kupplungsteil 25 leicht in Eingriff mit der Kuppelverzahnung 29a des Schnellgangzahnrades 29 oder der Verzahnung des Lastgang-Zwischenrades 30a gebracht werden.

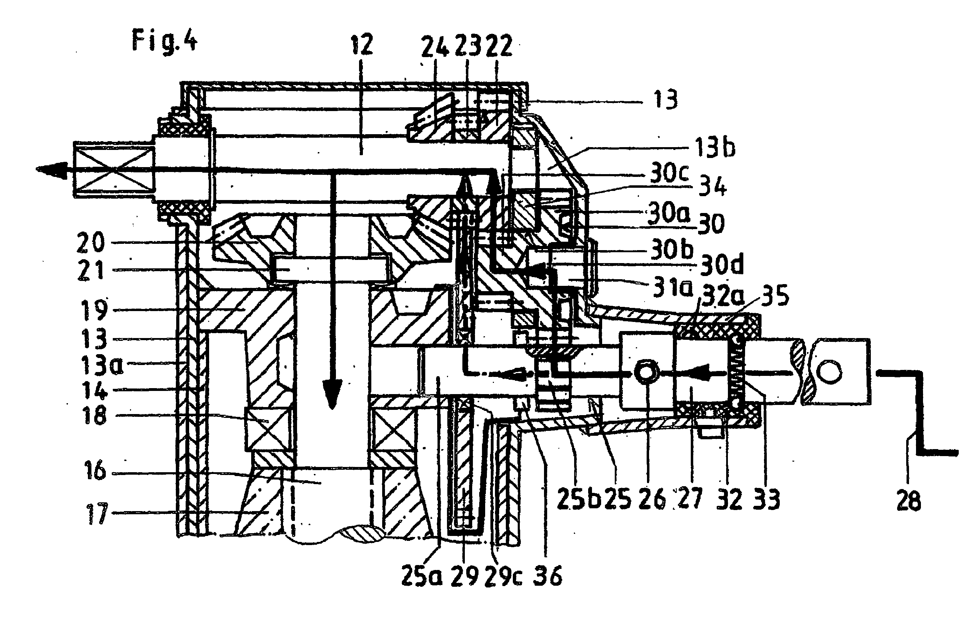

**Fig. 4** zeigt eine Ausgestaltung der Stütze 10, bei der das Lastgang-Zwischenzahnrad 30a und die Verzahnung des eingreifenden Lastgangritzels 25b in einem Ausprägungsbereich 13b der Vorderwand des Stützenaußenrohres 13 angeordnet sind. Der Lastgang-Zwischenzahnradsatz 30 ist stirnseits bzw. stirnseitig auf dem Königszapfen 31 a, der hierbei in der Vorderwand des Stützenaußenrohres 13 sitzt, gelagert und sein mittiger Lagerbereich 30b befindet sich in einem Lagerteil 34, das im Stützenaußenrohr 13 befestigt ist. Das Triebstück 27 lagert in der hierbei nach außen zu entnehmenden Bundbuchse 32, die arretierbar in einer Lagerhülse 35 angeordnet ist. Die Lagerhülse 35 ist hermetisch dicht an der Außenseite des Ausprägungsbereichs 13b des Stützenaußenrohres 13 befestigt.

Auf dem Lagerzapfen 25a des Ritzel-Kupplungsteils 25 sind radial überstehende Mitnehmer 36 vorgesehen. Das Schnellgangzahnrad 29 weist innerhalb seiner Lagerbohrung Mitnehmeraufnahmenuten 29c auf, in die die Mitnehmer 36 eingreifen, wenn das Ritzel-Kupplungsteil 25 für den Schnellgangbetrieb eingeschoben ist. Der jeweilige Kraftfluß beim Last- und dem Schellgangbetrieb der Stütze 10 ist in **Fig. 4** mit Pfeillinien bzw. mit strichpunktierten Pfeillinien dargestellt.

### Bezugszeichenliste

- 10: Stütze
- 11: Verbindungswelle
- 12: Abtriebswelle
- 13: Stützenaußenrohr
- 13a: Anschraubplatte
- 13b: Ausprägungsbereich
- 14: Stützeninnenrohr
- 15: Fuß
- 16: Spindel
- 17: Mutter
- 18: Axiallager
- 19: Lagerungenteil
- 20: Tellerrad
- 21: Stift
- 22: Lastgangzahnrad
- 23: Schnellgangritzel
- 24: Kegelritzel
- 25: Ritzel-Kupplungsteil
- 25a: Lagerzapfen
- 25b: Verzahnung des Lastgangritzels
- 26: Spannstift
- 27: Triebstück
- 28: Handkurbel
- 29: Schnellgangzahnrad
- 29a: Kuppelverzahnung
- 29b: Lagerbuchse
- 29c: Mitnehmeraufnahmenut
- 30: Lastgang Zwischenzahnradsatz
- 30a: Lastgang Zwischenzahnrad
- 30b: Lagerbereich
- 30c: Lastgang-Zwischenritzel
- 30d: Innentagerbereich
- 31: Deckel-Lagerteil
- 31a: Königszapfen
- 32: Bundbuchse
- 32a: Radialnut
- 33: Kugelarretierung
- 34: Lagerteil
- 35: Lagerhülse
- 36: Mitnehmer

## Patentansprüche

1. Höhenverstellbare Stütze (10) für Sattelauflieger oder dergleichen, umfassend
ein an einem Chassis des Sattelaufliegers befestigbares Stützenaußenrohr (13), ein im Stützenaußenrohr (13) angeordnetes verschiebbares Stützeninnenrohr (14), an dessen unteren Endbereich ein Fuß (15) befestigt ist und das mit einer Mutter (17) verbunden ist, die sich auf einer Spindel (16) befindet, welche über ein Getriebe antreibbar ist,
wobei das Getriebe mindestens eine Kegelradstufe (20,24) und einen vorgelagerten umschaltbaren Getriebebereich mit stirnverzahnten Zahnrädern für einen Schnellgangbetrieb und einen Lastgangbetrieb aufweist, **dadurch gekennzeichnet, daß** die mindestens vorhandenen Zahnräder und Ritzel des vorgelagerten Getriebebereichs ein auf einem Ritzel-Kupplungsteil (25) gelagertes Schnellgangzahnrad (29), eine als Lastgangritzel (25b) ausgebildete Verzahnung des Ritzel-Kupplungsteils (25), ein auf einer Abtriebswelle (12) sitzendes Schnellgangritzel (23), ein auf der Abtriebswelle (12) sitzendes Lastgangzahnrad (22) und einen zwischen dem Ritzel-Kupplungsteil (25) und der Abtriebswelle (12) angeordneten Lastgang-Zwischenzahnradsatz (30) mit einem Lastgang-Zwischenzahnrad (30a) sowie einem Lastgang-Zwischenritzel (30c) aufweisen, und
wobei das Schnellgangzahnrad (29) mit dem Schnellgangritzel (23), das Lastgangritzel (25b) mit dem Lastgang-Zwischenzahnrad (30a) sowie das Lastgang-Zwischenritzel (30c) mit dem Lastgangzahnrad (22) paarweise in mindestens drei verschiedenen vertikalen Ebenen verteilt innerhalb und/oder vor dem Stützenaußenrohr (13) angeordnet sind.

2. Stütze nach Anspruch 1, wobei wenigstens der Lastgangbereich mit den stirnverzahnten Zahnrädern (25b, 30a, 30c, 22) zweistufig ist.

3. Stütze nach einem der vorhergehenden Ansprüche, wobei das Schnellgangzahnrad (29) drehbar auf dem Ritzel-Kupplungsteil (25) gelagert ist und in permanentem Eingriff mit dem Schnellgangritzel (23) ist.

4. Stütze nach einem der vorhergehenden Ansprüche, wobei sich das Schnellgangzahnrad (29) mit dem Schnellgangritzel (23) und das Lastgang-Zwischenritzel (30c) mit dem Lastgangzahnrad (22) in jeweils einer vertikalen Ebene innerhalb des regulären Querschnittes des Stützenaußenrohres (13) befinden und die Verzahnung des Lastgangritzels (25b) mit dem Lastgang-Zwischenzahnrad (30a) in einer vertikalen Ebene vor dem Stützenaußenrohr (13) angeordnet ist.

5. Stütze nach einem der Ansprüche 1 - 4, wobei sich das Schnellgangzahnrad (29) mit dem Schnellgangritzel (23) und das Lastgang-Zwischenritzel (30c) mit dem Lastgangzahnrad (22) in jeweils einer vertikalen Ebene innerhalb des regulären Querschnittes des Stützenaußenrohres (13) befinden und die Verzahnung des Lastgangritzels (25b) mit dem Lastgang-Zwischenzahnrad (30a) in einer vertikalen Ebene innerhalb eines Ausprägungsbereiches (13b) der Vorderwand des Stützenaußenrohres angeordnet sind.

6. Stütze nach einem der vorhergehenden Ansprüche, wobei im Stützenaußenrohr (13) mindestens ein Lagerteil (34) für den Lastgang-Zwischenzahnradsatz (30) und/oder eine Abtriebswelle (12) befestigt ist.

7. Stütze nach Anspruch 5, wobei eine Lagerhülse (35) zur Lagerung eines Triebstücks (27) vorgesehen ist, die nicht lösbar und/oder hermetisch dicht an der Außenseite des Ausprägungsbereichs (13b) des Stützenaußenrohres (13) befestigt ist.

8. Stütze nach einem der vorhergehenden Ansprüche, wobei das Lastgang-Zwischenzahnrad (30a) und das Lastgang-Zwischenritzel (30c) als einstückiger Lastgang-Zwischenzahnradsatz (30) ausgebildet sind.

9. Stütze nach Anspruch 8, wobei der Lastgang-Zwischenzahnradsatz (30) zwischen dem Lastgang-Zwischenritzel (30c) und dem Lastgang-Zwischenzahnrad (30a) einen Lagerbereich (30b) aufweist.

10. Stütze nach einem der Ansprüche 8 oder 9, wobei der Lastgang-Zwischenzahnradsatz (30) im Bereich der vorderen Wandung des Stützenaußenrohres (13) und in einem Deckel-Lagerteil (31) gelagert ist.

11. Stütze nach einem der Ansprüche 8 - 10, wobei der Lastgang-Zwischenzahnradsatz (30) einen Innenlagerbereich (30d) aufweist.

12. Stütze nach einem der Ansprüche 8 - 11, wobei der Lastgang-Zwischenzahnradsatz (30) auf einer Seite auf einem Königszapfen (31 a) gelagert ist, der an einem Deckel-Lagerteil (31) oder im vorderen Wandbereich des Stützenaußenrohres (13) angebracht ist.

13. Stütze nach einem der vorhergehenden Ansprüche, wobei das Lastgangzahnrad (22), das Schnellgangritzel (23) und das Kegelritzel (23) ein Teil sind.

14. Stütze nach einem der vorhergehenden Ansprüche, wobei der Kopfkreisdurchmesser des Lastgangzahnrads (22) den größten Durchmesser des Kegelritzels (23) nicht oder nicht wesentlich überragt.

## Claims

1. A height-adjustable support (10) for semi-trailers or the like, comprising
a support outer tube (13) which can be fastened to a chassis of the semi-trailer, a slidable support inner tube (14) arranged in the support outer tube (13), at whose lower end region a foot (15) is fastened and which is connected with a nut (17) located on a spindle (16) which is drivable by means of a transmission,
wherein the transmission has at least a bevel gear stage (20, 24) and a shiftable transmission area located upstream having gearwheels with spur toothing for a fast-gear operation and a low-gear operation,
**characterized in that**
the at least present gearwheels and pinions of the transmission area located upstream have a fast-gear gearwheel (29) supported on a pinion coupling part (25), a toothing designed as a low-gear pinion (25b) of the pinion coupling part (25), a fast-gear pinion (23) sitting on an output shaft (12), a low-gear gearwheel (22) sitting on the output shaft (12) and a low-gear intermediate gearwheel set (30) arranged between the pinion coupling part (25) and the output shaft (12) with a low-gear intermediate gearwheel (30a) as well as a low-gear intermediate pinion (30c), and
wherein the fast-gear gearwheel (29) with the fast-gear pinion (23), the low-gear pinion (25b) with the low-gear intermediate gearwheel (30a) as well as the low-gear intermediate pinion (30c) with the low-gear gearwheel (22) are arranged in pairs in at least three different vertical planes distributed within and/or in front of the support outer tube (13).

2. The support according to claim 1, wherein at least the low-gear region with the spur-toothed gearwheels (25b, 30a, 30c, 22) has two stages.

3. The support according to any one of the preceding claims, wherein the fast-gear gearwheel (29) is supported rotatably on the pinion coupling part (25) and permanently engages with the fast-gear pinion (23).

4. The support according to any one of the preceding claims, wherein the fast-gear gearwheel (29) and the fast-gear pinion (23) as well as the low-gear intermediate pinion (30c) and the low-gear gearwheel (22) are each located in a vertical plane within the regular cross-section of the support outer tube (13), and the toothing of the low-gear pinion (25b) is arranged with the low-gear intermediate gearwheel (30a) in a vertical plane in front of the support outer tube (13).

5. The support according to any one of claims 1-4, wherein the fast-gear gearwheel (29) and the fast-gear pinion (23) as well as the low-gear intermediate pinion (30c) and the low-gear gearwheel (22) are each located in a vertical plane within the regular cross-section of the support outer tube (13), and the toothing of the low-gear pinion (25b) with the low-gear intermediate gearwheel (30a) is arranged in a vertical plane within a shaped region (13b) of the front wall of the support outer tube.

6. The support according to any one of the preceding claims, wherein in the support outer tube (13) there is fastened at least a bearing part (34) for the low-gear intermediate gearwheel set (30) and/or an output shaft (12).

7. The support according to claim 5, wherein a bearing sleeve (35) for supporting a driving piece (27) is provided which is permanently or in a hermetically sealed manner fastened to the outside of the shaped region (13b) of the support outer tube (13).

8. The support according to any one of the preceding claims, wherein the low-gear intermediate gearwheel (30a) and the low-gear intermediate pinion (30c) are designed as a one-piece low-gear intermediate gearwheel set (30).

9. The support according to claim 8, wherein the low-gear intermediate gearwheel set (30) has a bearing region (30b) between the low-gear intermediate pinion (30c) and the low-gear intermediate gearwheel (30a).

10. The support according to any one of claims 8 or 9, wherein the low-gear intermediate gearwheel set (30) is supported in the area of the front wall of the support outer tube (13) and in a cap bearing part (31).

11. The support according to any one of claims 8-10, wherein the low-gear intermediate gearwheel set (30) has an inner bearing region (30d).

12. The support according to any one of claims 8-11, wherein the low-gear intermediate gearwheel set (30) is supported on one side on a king pin (31 a), which is fastened to a cap bearing part (31) or in the front wall area of the support outer tube (13).

13. The support according to any one of the preceding claims, wherein the low-gear gearwheel (22), the fast-gear pinion (23) and the bevel pinion (23) form one part.

14. The support according to any one of the preceding claims, wherein the outside diameter of the low-gear gearwheel (22) does not or not substantially exceed the largest diameter of the bevel pinion (23).

## Revendications

1. Appui réglable en hauteur (10) pour semi-remorques ou similaires, comprenant
un tube extérieur d'appui (13) susceptible d'être fixé sur un châssis du semiremorque,
un tube intérieur d'appui (14) déplaçable agencé dans le tube extérieur d'appui (13), à la zone d'extrémité inférieure duquel est fixé un pied (15) et qui est relié à un écrou (17), lequel se trouve sur une broche (16) qui peut être entraînée via un mécanisme,
dans lequel le mécanisme comprend au moins un étage d'engrenages coniques (20, 24) et une zone de mécanisme commutable placée en amont avec des engrenages à denture droite pour un fonctionnement de déplacement rapide et pour un fonctionnement de déplacement sous charge,
**caractérisé en ce que**
les engrenages et les pignons au moins présents de la zone de mécanisme placée en amont comprennent un engrenage de déplacement rapide (29) monté sur une partie d'accouplement de pignon (25), une denture, réalisée sous forme de pignon de déplacement sous charge (25b) de la partie d'accouplement de pignon (25), un pignon de déplacement rapide (23) calé sur un arbre mené (12), un engrenage de déplacement sous charge (22) calé sur l'arbre mené (12), et un groupe d'engrenages intermédiaires de déplacement sous charge (30) agencé entre la partie d'accouplement de pignon (25) et l'arbre mené (12) avec un engrenage intermédiaire (30) de déplacement sous charge et un pignon intermédiaire (30c) de déplacement sous charge, et
dans lequel l'engrenage de déplacement rapide (29) avec le pignon de déplacement rapide (23), le pignon de déplacement sous charge (25b) avec l'engrenage intermédiaire de déplacement sous charge (30a), et le pignon intermédiaire de déplacement sous charge (30c) avec l'engrenage de déplacement sous charge (22) sont agencés par paires de manière répartie dans au moins trois plans verticaux dififérents et/ou avant le tube extérieur d'appui (13).

2. Appui selon la revendication 1, dans lequel au moins la zone de déplacement sous charge avec les engrenages à denture droite (25b, 30a, 30c, 22) est à deux étages.

3. Appui selon l'une des revendications précédentes, dans lequel l'engrenage de déplacement rapide (29) est monté avec possibilité de rotation sur la partie d'accouplement de pignon (25), et est en engagement permanent avec le pignon de déplacement rapide (23).

4. Appui selon l'une des revendications précédentes, dans lequel l'engrenage de déplacement rapide (29) avec le pignon de déplacement rapide (23), et le pignon intermédiaire de déplacement sous charge (30c) avec l'engrenage de déplacement sous charge (22) se trouvent respectivement dans un plan vertical à l'intérieur de la section transversale régulière du tube extérieur d'appui (13), et la denture du pignon de déplacement sous charge (25b) avec l'engrenage intermédiaire de déplacement sous charge (30a) est agencée dans un plan vertical avant le tube extérieur d'appui (13).

5. Appui selon l'une des revendications 1 à 4, dans lequel l'engrenage de déplacement rapide (29) avec le pignon de déplacement rapide (23), et le pignon intermédiaire de déplacement sous charge (30c) avec l'engrenage de déplacement sous charge (22) se trouvent respectivement dans un plan vertical à l'intérieur de la section transversale régulière du tube extérieur d'appui (13), et la denture du pignon de déplacement sous charge (25b) avec l'engrenage intermédiaire de déplacement sous charge (30a) est agencée dans un plan vertical à l'intérieur d'une zone en relief (13b) de la paroi antérieure du tube extérieur d'appui.

6. Appui selon l'une des revendications précédentes, dans lequel au moins une partie de palier (34) pour le groupe d'engrenages intermédiaires de déplacement sous charge (30) et/ou un arbre mené (12) est fixé dans le tube extérieur d'appui (13).

7. Appui selon la revendication 5, dans lequel il est prévu une douille de palier (35) pour le montage d'une pièce de poussée (27) qui est fixée de façon non détachable et/ou hermétiquement contre la face extérieure de la zone en relief (13b) du tube extérieur d'appui (13).

8. Appui selon l'une des revendications précédentes, dans lequel l'engrenage intermédiaire de déplacement sous charge (30a) et le pignon intermédiaire de déplacement sous charge (30c) sont réalisés sous forme d'un groupe d'engrenages intermédiaires de déplacement sous charge d'un seul tenant (30).

9. Appui selon la revendication 8, dans lequel le groupe d'engrenages intermédiaires de déplacement sous charge (30) comprend une zone de palier (30b) entre le pignon intermédiaire de déplacement sous charge (30c) et l'engrenage intermédiaire de déplacement sous charge (30a).

10. Appui selon l'une des revendications 8 ou 9, dans lequel le groupe d'engrenages intermédiaires de déplacement sous charge (30) est monté dans la région de la paroi antérieure du tube extérieur d'appui (13) et dans une partie de palier formant couvercle (31).

11. Appui selon l'une des revendications 8 à 10, dans lequel le groupe d'engrenages intermédiaires de déplacement sous charge (30) comporte une zone de palier intérieure (30d).

12. Appui selon l'une des revendications 8 à 11, dans lequel le groupe d'engrenages intermédiaires de déplacement sous charge (30) est monté sur un côté sur un tourillon maître (31 a), lequel est rapporté dans une partie de palier formant couvercle (31) ou dans la zone de paroi antérieure du tube extérieur d'appui (13).

13. Appui selon l'une des revendications précédentes, dans lequel l'engrenage de déplacement sous charge (22), le pignon de déplacement rapide (23) et le pignon conique (23) sont une seule pièce.

14. Appui selon l'une des revendications précédentes, dans lequel le diamètre du cercle de tête de l'engrenage de déplacement sous charge (22) ne dépasse pas ou ne dépasse pas sensiblement le plus grand diamètre du pignon conique (23).
